# EUROPEAN PATENT APPLICATION

(11) **EP 1 616 891 A1**
(43) Date of publication of application: **18.01.2006**
(21) Application number: 05014360.1
(22) Date of filing: 01.07.2005
(51) Int. Cl.: C08G 18/79, C08G 18/80, C09D 175/04

(54) **Polyisocyanates with improved compatibility with high hydroxyl content polyols**

(30) Priority: 14.07.2004 US 890874
(71) Applicant: Bayer MaterialScience LLC, Pittsburgh PA 15205 (US)
(72) Inventor: Zielinski, David P., Wexford, PA 15090-9539 (US)
(74) Representative: Klimiuk, Meike

(57) **Abstract**

A composition that includes a mixture of A) a prepolymer of aliphatic isocyanates adducted with an active hydrogen functional compound containing a polar group; and B) a polyol containing at least four active hydrogen groups. The mixture does not separate into two phases after standing at room temperature for two hours. The composition can be used to coat a substrate by applying the above described composition to at least a portion of a surface of the substrate.

## Description

### BACKGROUND OF THE INVENTION

### 1. Field of the Invention

The present invention relates to compositions containing isocyanates and polyols as well as to coating compositions containing such.

### 2. Description of the Prior Art

When polyisocyanates are formulated with high hydroxyl content polyols, the compounds are typically incompatible with each other and have a tendency to separate from one another in two distinct phases. For example, HDI trimer has poor compatibility with high hydroxy polyols, which limits the usefulness of HDI trimer. The resulting phase separation can lead to coatings that have less than desirable properties, such as for example poor gloss.

Thus, there is a need in the art for compositions containing polyisocyanates and high hydroxy polyols that form stable mixtures that do not denigrate into separate phases, without affecting the desirable properties of such compositions.

### SUMMARY OF THE INVENTION

The present invention is directed to a composition that includes a mixture of A) a prepolymer of aliphatic isocyanates at least partially adducted with an active hydrogen functional compound containing a polar group; and B) a polyol containing at least four active hydrogen groups. The mixture does not separate into two phases after standing at room temperature for two hours.

The present invention is also directed to a coating composition that includes the above described composition of A) and B) as well as a method of coating a substrate that includes applying the above described coating composition to at least a portion of a surface of the substrate and substrates coated by the method.

### DETAILED DESCRIPTION OF THE INVENTION

Other than in the operating examples, or where otherwise indicated, all numbers or expressions referring to quantities of ingredients, reaction conditions, etc. used in the specification and claims are to be understood as modified in all instances by the term "about."

As used herein the term "alkyl" refers to a monovalent radical of an aliphatic hydrocarbon chain of general formula CₛH₂ₛ₊₁, where s is the number of carbon atoms, or ranges therefore, as specified.

As used herein the terms "cyclic alkyl" or "cycloalkyl" refer to a monovalent radical of an aliphatic hydrocarbon chain that forms a ring of general formula CₛH₂ₛ₋₁, where s is the number of carbon atoms, or ranges therefore, as specified. The term "substituted cycloalkyl" refers to a cycloalkyl group, containing one or more hetero atoms, non-limiting examples being -O-, -NR-, and -S- in the ring structure, and/or where one or more hydrogens are replaced with a non-carbon atom or group, non-limiting examples of such atoms or groups include halides, amines, alcohols, oxygen (such as ketone or aldehyde groups), and thiols. R represents an alkyl group of from 1 to 24 carbon atoms.

As used herein, the term "aryl" refers to a monovalent radical of an aromatic hydrocarbon. Aromatic hydrocarbons include those carbon based cyclic compounds containing conjugated double bonds where 4t+2 electrons are included in the resulting cyclic conjugated pi-orbital system, where t is an integer of at least 1. As used herein, aryl groups can include single aromatic ring structures, one or more fused aromatic ring structures, covalently connected aromatic ring structures, any or all of which can include heteroatoms. Non-limiting examples of such heteroatoms that can be included in aromatic ring structures include O, N, and S.

As used herein, the term "alkylene" refers to acyclic or cyclic divalent hydrocarbons having a carbon chain length of from C₁ (in the case of acyclic) or C₄ (in the case of cyclic) to C₂₅, typically C₂ to C₁₂, which may be substituted or unsubstituted, and which may include substituents. As a non-limiting example, the alkylene groups can be lower alkyl radicals having from 1 to 12 carbon atoms. As a non-limiting illustration, "propylene" is intended to include both n-propylene and isopropylene groups; and, likewise, "butylene" is intended to include both n-butylene, isobutylene, and t-butylene groups.

As used herein, the term "(meth)acrylic" and "(meth)acrylate" are meant to include the corresponding derivatives of acrylic acid and methacrylic acid, without limitation.

As used herein, the term "cure" (or "curing") is intended to include both crosslinking of the adhesive, sealant, or coating composition components and film formation as a result of evaporation of solvents and diluents along with the development of physical and chemical properties in the resultant film such as film hardness and gloss development.

The present invention provides compositions that include a mixture of
A) a prepolymer of aliphatic isocyanates at least partially adducted with an active hydrogen functional compound containing a polar group; and
B) a polyol containing at least four active hydrogen groups.

The mixture in the inventive compositions does not separate into two phases after standing at room temperature for two hours, in some cases after six hours, in other cases after 12 hours, in some situations after one day, in other situations after three days, and in particular after seven day at ambient conditions. As used herein, the term "separation into two phases" is meant to indicate that two discrete phases form in the composition, either through separation, where a meniscus separates the phases or precipitation, where one phase settles or floats to separate from the continuous phase.

The present composition contains at least partially adducted aliphatic isocyanates. As used herein, the term "adducted" refers to reactions of a portion of the isocyanate groups with a compound containing an active hydrogen group.

In the present invention, the aliphatic isocyanates are at least partially adducted, meaning that some of the aliphatic isocyanates can be adducted. The amount adducted will be an amount sufficient to provide for a homogeneous clear mixture of the aliphatic isocyanates and polyols. In present compositions, at least 5 mol%, in some cases at least 10 mol%, and in other cases at least 20 mol% of the aliphatic isocyanate groups can be adducted. Also, up to 50% of the aliphatic isocyanate groups can be adducted, in some cases up to 45 mol%, in other cases up to 40 mol%, in some situations up to 35 mol%, and in other situations up to 30 mol%. The amount of aliphatic isocyanates that are adducted will depend on the particular aliphatic isocyanates, adducting agent, and polyols employed in combination. The amount of aliphatic isocyanates that are adducted can be any value recited above and can range between any of the values recited above.

Any suitable polyisocyanate can be used in the invention, such as polyisocyanates containing 2 or 3 and up to 10, in some cases up to 8, and in other cases up to 6 isocyanate groups. Suitable polyisocyanates which can be used in the invention are known and include monomeric organic diisocyanates represented by the formula, OCN-R⁷-NCO, in which R⁷ represents an organic group obtained by removing the isocyanate groups from an organic diisocyanate having a molecular weight of 112 to 1,000, in many cases 140 to 400. Non-limiting examples of suitable R⁷ groups include C₂ to C₂₄ linear, branched, and cyclic alkylene, arylene, and aralkylene, which may optionally contain one or more isocyanate groups. In particular embodiments, the diisocyanates are those represented by the above formula in which R⁷ represents a divalent aliphatic hydrocarbon group having from 4 to 18 carbon atoms, a divalent cycloaliphatic hydrocarbon group having from 5 to 15 carbon atoms, a divalent araliphatic hydrocarbon group having from 7 to 15 carbon atoms or a divalent aromatic hydrocarbon group having 6 to 15 carbon atoms.

In a further embodiment of the invention, the prepolymer of aliphatic isocyanates contain one or more groups selected from urethane, urea, uretdione, isocyanurate, allophanate, biuret, iminooxadiazinedione and oxadiazinetrione,

In another embodiment of the invention, the aliphatic isocyanates include polyisocyanates based on aliphatic diisocyanates, cycloaliphatic diisocyanates, and/or araliphatic diisocyanates. As a non-limiting example, the aliphatic isocyanates are diisocyanates selected from 1,4-diisocyanatobutane, 1,6-diisocyanatohexane (HDI), 2-methyl-1,5-diisocyanatopentane, 1,5-diisocyanato-2,2-dimethylpentane, 2,2,4-trimethyl-1,6-diisocyanatohexane, 2,4,4-trimethyl-1,6-diisocyanatohexane, 1,10-diisocyanatodecane, 1,3- diisocyanatocyclohexane, 1,4-diisocyanatocyclohexane, 1,3- bis-(isocyanatomethyl)-cyclohexane, ,4-bis-(isocyanatomethyl)-cyclohexane, 1-isocyanato-3,3,5-trimethyl-5-isocyanatomethylcyclohexane (isophorone diisocyanate, IPDI), 4,4'-diisocyanatodicyclohexylmethane, 1-isocyanato-1-methyl-4(3)isocyanatomethylcyclohexane (IMCI), bis-(isocyanatomethyl)-norbornane, 1,3- bis-(2-isocyanato-prop-2-yl)-benzene and 1,4-bis-(2-isocyanato-prop-2-yl)-benzene.

Additional suitable isocyanates include, but are not limited to prepolymers of polyisocyanates. In an embodiment of the invention, the prepolymer of aliphatic isocyanates can be the product of an oligomerization reaction of aliphatic diisocyanates. Non-limiting examples of such oligomerization reactions include carbodiimidization, dimerization, trimerization, biuretization, urea formation, urethanization, allophanatization and/or cyclization with the formation of oxadiazine structures.

Non-limiting examples of isocyanurate group-containing polyisocyanates include those prepared as set forth in U.S. Pat. Nos. 4,288,586 and 4,324,879; the pertinent portions of which are herein incorporated by reference. The isocyanato-isocyanurates generally have an average NCO functionality of at least 2.1, in some cases at least 2.4 and can be up to 6, in some cases up to 4.1 as well as an NCO content of at least 5%, in some cases up to 10%, and in other cases up to 15 % and up to 30%, in some cases up to 25% and in other cases up to 20% by weight. The NCO functionality and/or NCO content can be any of the values or vary between any of the values recited above.

Non-limiting examples of uretdione diisocyanates include those prepared by oligomerizing a portion of the isocyanate groups of a diisocyanate in the presence of a suitable catalyst, e.g, a trialkyl phosphine catalyst, and which can be used in admixture with other aliphatic and/or cycloaliphatic polyisocyanates, particularly the isocyanurate group-containing polyisocyanates set forth above.

Non-limiting examples of biuret group-containing polyisocyanates include those prepared according to the processes disclosed in U.S. Pat. Nos. 3,124,605; 3,358,010; 3,644,490; 3,862,973; 3,906,126; 3,903,127; 4,051,165; 4,147,714; or 4,220,749; the pertinent portions of which are herein incorporated by reference, by using co-reactants such as water, tertiary alcohols, primary and secondary monoamines, and primary and/or secondary diamines. These polyisocyanates can have an NCO content of 18 to 22% by weight and an average NCO functionality of from 3 to 4.5.

Non-limiting examples of urethane group-containing polyisocyanates include those prepared in accordance with the process disclosed in U.S. Pat. No. 3,183,112; the pertinent portions of which are herein incorporated by reference, by reacting excess quantities of polyisocyanates, in some cases diisocyanates, with low molecular weight glycols and polyols having molecular weights of less than 400, such as trimethylol propane, glycerine, 1,2-dihydroxy propane and mixtures thereof. The urethane group-containing polyisocyanates can have an NCO content of 12 to 20% by weight and an (average) NCO functionality of 2.1 to 3.5.

Non-limiting examples of allophanate group-containing polyisocyanates include those prepared according to the processes disclosed in U.S. Pat. Nos. 3,769,318, 4,160,080 and 4,177,342; the pertinent portions of which are herein incorporated by reference. The allophanate group-containing polyisocyanates can have an NCO content of from 12 to 25% by weight and an (average) NCO functionality of 2 to 6.

Non-limiting examples of isocyanurate and allophanate group-containing polyisocyanates include those prepared in accordance with the processes set forth in U.S. Pat. Nos. 5,124,427; 5,208,334; and 5,235,018; the pertinent portions of which are herein incorporated by reference. Such polyisocyanates can contain these groups in a ratio of monoisocyanurate groups to mono-allophanate groups of about 10:1 to 1:10, in some cases about 5:1 to 1:7.

Non-limiting examples of iminooxadiazine dione and optionally isocyanurate group-containing polyisocyanates include those that can be prepared in the presence of special fluorine-containing catalysts as described in U.S. Pat. No. 5,914,383; the pertinent portions of which are herein incorporated by reference. These polyisocyanates generally have an average NCO functionality of 3 to 8 and an NCO content of 5 to 30%, in some cases 10 to 25% and in other cases 15 to 25% by weight.

Non-limiting examples of carbodiimide group-containing polyisocyanates include those that are prepared by oligomerizing di- or polyisocyanates in the presence of known carbodiimidization catalysts as described in GB 899,036, and U.S. Pat. Nos. 3,152,162; 4,294,719; 4,088,665; and 4,344,855; the pertinent portions of which are herein incorporated by reference.

Non-limiting examples of polyisocyanates containing oxadiazinetrione groups include those containing the reaction product of two moles of a diisocyanate and one mole of carbon dioxide.

As indicated above, the prepolymer of an aliphatic isocyanate is adducted with an active hydrogen functional compound containing a polar group. Any suitable active hydrogen functional compound can be used in the invention, so long as it includes a polar group that will facilitate stability, i.e., the present composition not separating into two phases. As such the active hydrogen functional group can be, without limitation, hydroxyl, amine, thiol, carboxylic acid, amide and combinations thereof.

Any suitable polar group can be included in the active hydrogen functional compound of the invention, so long as the polar group does not contain an active hydrogen and facilitates stability, i.e., the present composition not separating into two phases. As such the polar group can be, without limitation, a tertiary amine, a carbonate, a sulfonate, a carboxylic acid ester, an ether, a thioether, a sulfate, a phosphonate, a phosphate, a urea, a urethane, a nitrate and combinations thereof.

In an embodiment of the invention, the active hydrogen functional compound containing a polar group is a compound according to the following structure:

Z-R¹-A

where,
- R¹: is a C₁-C₂₄ linear, branched or cyclic alkylene, arylene, alkarylene, aralkylene, or alkenylene group,
- Z: is a polar group that does not contain an active hydrogen, and
- A: is a group selected from hydroxyl, thiol, carboxylic acid, amide, primary amine, secondary amine, and C₁-C₁₂ linear, branched or cyclic alkyl aspartate esters.

Suitable aspartate esters include those according to the formula 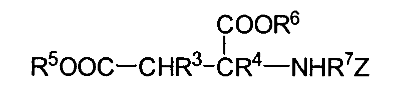 where
R⁵ and R⁶ are identical or different and represent C₁-C₁₂ linear, branched or cyclic alkyl groups,
R³ and R⁴ are identical or different and represent H or C₁-C₄ linear or branched alkyl groups,
R⁷ is a C₁-C₂₄ linear, branched or cyclic alkylene, arylene, alkarylene, aralkylene, or alkenylene group, and
Z is as described above.

In a particular embodiment of the invention, the polar group, Z, is a polar group selected from -NR²₂, -OR², -SR², -C(O)OR², -NO², silane, halide, sulfonate, ethyl carbonate, -S(O)OR², -P(O)OR², -PR²₂, -P(O)R², 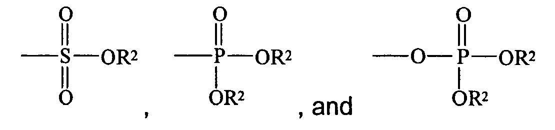
where each occurrence of R² is independently selected from C₁-C₆ linear, branched or cyclic alkyl.

In another particular embodiment of the invention, the active hydrogen functional compound in A) is hydroxyl-functional. Non-limiting examples of suitable hydroxyl-functional compounds containing a polar group that can be used as the active hydrogen functional compound in A) include dimethyl ethanol amine, diethyl ethanol amine, methyl ethyl ethanol amine, glycerine carbonate, and combinations thereof.

The present composition also includes a polyol containing at least four active hydrogen groups, B). In an embodiment of the invention, the polyol can include one or more polyols selected from polyester polyols, polyether polyols, polyhydroxy polycarbonates, polyhydroxy polyacetals, polyhydroxy poly(meth)acrylates, polyhydroxy polyester amides, polyhydroxy polythioethers, and combinations thereof.

In an embodiment of the invention, the polyols have a number average molecular weight of at least 500, in some cases at least 1,000 and in other cases at least 2,000. Also, the number average molecular weight of the polyether polyol can be up to 20,000, in some cases up to 15,000 and in other cases up to 12,000. The number average molecular weight of the polyol can vary and range between any of the values recited above.

Typically, the equivalent ratio of isocyanate groups in A) to hydroxyl groups in B) is from 3:1 to 1:3, in some cases from 2:1 to 1:2, and in other cases from 1.5:1 to 1:1.5.

In another embodiment of the invention, the present composition can be a coating composition and can further include one or more additives typically used in coating compositions. Such additives include, but are not limited to solvents, plasticizers, pigments, fillers, catalysts, levelling agents, thickeners, stabilizers, light stabilizers, antioxidants, defoamers, catalysts and UV absorbers.

Suitable solvents include, but are not limited to hydrocarbons such as toluene, xylene or higher alkylbenzenes, and other such as Solvesso® 100 (Exxon Mobile Chemicals) or solvent naphtha; esters such as ethyl acetate, butyl acetate, methylglycol acetate, ethylglycol acetate or methoxypropyl acetate; ketones such as methylethyl ketone, methylisobutyl ketone, or methyl iso-amyl ketone; 2-methylpyrrolidone, N-methylpyrrolidone and mixtures thereof. Solvents are typically used only in the smallest possible amount, if at all, for reasons of environmental compatibility. The amount of solvent typically does not exceed 70 wt.% and can be from 0.5 to 70 wt.%, in some cases from 1 to 50 wt.%, and in some situations from 5 to 40 wt.%, based on the sum of polyurethane resin and solvent.

Non-limiting examples of plasticizers that can be used in the present invention include dioctyl phthalate (DOP) dibutyl phthalate (DBP); diisodecyl phthalate (DIDP); dioctyl adipate isodecyl malonate; diethylene glycol dibenzoate, pentaerythritol ester; butyl oleate, methyl acetylricinoleate; tricresyl phosphate and trioctyl phosphate; polypropylene glycol adipate and polybutylene glycol adipate; and the like. Such plasticizers can be used alone or in combination of two or more.

Non-limiting examples of catalysts, which may be used for curing, that can be used in the present invention include organotin-based systems, titanic acid esters, zinc salts, other suitable metal salts, and tertiary amines. Non-limiting examples of organotin-based systems include tin octoate, dibutyltin dilaurate, dibutyltin oxide, tin dioctoate, tin bis-(2-ethylhexanoate), dibutyl tin maleate, dibutyl tin diacetate, tin octylate, tin naphthenate, lead octylate, trimethylmethoxytin oxide, tributyltin toluenesulfonate, tributyltin methanesulfonate, and those disclosed in U.S. Patent No. 5,718,817.

Non-limiting examples of titanic acid esters include tetrabutyl titanate, tetrapropyl titanate, tetraisopropyl titanate, and titanium tetraacetylacetonate. Non-limiting examples of zinc salts include zinc octoate, zinc chloride, zinc 2-ethylcaproate, and zinc acetylacetonate. Non-limiting examples of other metal salts include iron(III) chloride, ferric acetylacetonate, zirconium chelates, aluminum chelates, bismuth carbonates, bismuth carboxylates, and molybdenum glycolate Non-limiting examples of tertiary amines include diazabicyclo(2.2.2)octane, 1,3-diazobicyclo (5,4,6) undecene-7, N,N-dimethylbenzylamine, N-methylmorpholine, 2,4,6-tris(dimethylaminomethyl) phenol, methylpyridine, N-methylpiperidine, and N,N-dimethylaminocyclohexane.

Non-limiting examples of leveling agents that can be used in the present invention include cellulose, e.g., nitrocellulose and cellulose acetate butyrate.

Non-limiting examples of wetting agents that can be used in the present invention include glycols, silanes, anionic surfactants, and any other wetting agents known in the art.

Non-limiting examples of flow control agents, that can be used in the present invention include polyacrylic esters, non-ionic fluorinated alkyl ester surfactants, non-ionic alkylarylpolyether alcohols, silicones, and the like, as well as those available under the trade name RESIFLOW® by Estron Chemical, Inc., Parsippany, NJ, those sold under the trade name Benzoin® by DSM, Inc., ; those available under the trade name MODAFLOW® from Monsanto and those available under the trade name SURFYNOL® available from Air Products, Bethlehem, PA.

Non-limiting examples of antifoaming agents that can be used in the present invention include those available as FOAMEX® from Rohm and Haas Company, Philadelphia, PA, those available under the trade name BYK®, available from BYK-Chemie USA, Wallingford, CT, and those available under the trade name FoamBrake® from BASF Corp., Mount Olive, NJ.

Non-limiting examples of fillers include fumed silica, settling silica, silicic anhydride, silicic hydrate, talc, limestone powder, kaolin, diatomaceous earth, fired clay, clay, bentonite, organic bentonite, zinc oxide, activated zinc white, and fibrous fillers such as glass fibers or filaments. The filler can have any suitable particle size, in an embodiment of the invention, the filler particle size can be from 5 nm to 10 µm, in some cases 10 nm to 5 µm, and in other cases from 25 nm to 1 µm.

Non-limiting examples of viscosity regulators that can be used in the present invention include polymers and dispersing aids that provide for high pigment loads at low viscosity, such as 9077, available from BYK-Chemie Gmbh, Wesel, Germany.

Non-limiting examples of pigments, in addition to the pigments in c), that can be used in the present invention include carbon black, titanium dioxide, calcium carbonate, iron oxide, aluminum trihydroxide, mica, calcium metasilicate, silica and magnesium carbonate.

Non-limiting examples of dyes that can be used in the present invention include mordant dyes, i.e., dyes prepared from plants, insects, and algae, and direct dyes, non-limiting examples being those based on benzidine or benzidine derivatives.

Non-limiting examples of ultra violet light absorbers that can be used in the present invention include benzotriazole-based ultra violet ray absorbers, salicylate-based ultraviolet ray absorbers, benzophenone-based ultraviolet ray absorbers, hindered amine-based light stabilizers and nickel-based light stabilizers. In a particular embodiment of the invention, hindered amine-based light stabilizers are used, such as those available under the trade name TINUVIN® from Ciba Specialty Chemicals, Basel, Switzerland.

Non-limiting examples of thermal stabilizers that can be used in the present invention include HCl scavengers, a non-limiting example being epoxidized soybean oil, esters of beta-thiodipropionic acid, non-limiting examples being lauryl, stearyl, myristyl or tridecyl esters, mercaptobenzimidazole, the zinc salt of 2-mercaptobenzimidazole, zinc dibutyl-dithiocarbamate, dioctadecyl disulfide, pentaerythritol tetrakis-(beta-dodecylmercapto)-propionate, and lead phosphate.

Non-limiting examples of antioxidants that can be used in the present invention include 2,6-di-t-butyl phenol, 2,4-di-t-butyl phenol, 2,6-di-t-butyl-4-methyl phenol, 2,5-di-t-butylhydroquinone, n-octadecyl-3-(3,5-di-t-butyl-4-hydro- xyphenyl)propionate, pentaerythrityl-tetrakis[3-(3,5-di-t-butyl-4-hydroxyp- henyl) propionate], 2,2'-methylenebis(4-methyl-6-t-butyl phenol), 4,4'-butylidenebis(3-methyl-6-t-butyl phenol), 4,4'-thiobis(3-methyl-6- -t-butyl phenol), N,N'-diphenyl-p-phenylenediamine, 6-ethoxy-2,2,4-trimethyl-1,2- -dihydroquinoline and the antioxidants available under the trade name IRGANOX® from Ciba Specialty Chemicals, Basel, Switzerland.

The present invention is also directed to a method of coating a substrate that includes applying the above described coating composition to at least a portion of a surface of the substrate.

The coating composition can be applied by conventional means including brushing, dipping, flow coating, spraying, and the like. Upon application to a substrate, the composition is allowed to form a substantially continuous film on the substrate, which can then be cured. The film is formed on the surface of the substrate by driving off liquids out of the film by heating or by an air drying period.

The coating composition can have a total solids content of from 30 to 100 wt.%, in some cases from 35 to 75 wt.%, and in other cases from 40 to 60 wt.%. The applied coating can optionally be heated to temperatures of from 100°C to 200°C, and in some cases 120°C to 160°C to cure the surface films applied. The curing time can be from 10 to 60 minutes, in some cases 15 to 45 minutes depending on the composition and the temperature.

The present invention is also directed to substrates coated according to the above-described method. In an embodiment of the invention, the substrate can include metal, plastic, paper, cement, concrete and other cementious materials, composites, and/or wood.

The present invention is more particularly described in the following examples, which are intended to be illustrative only, since numerous modifications and variations therein will be apparent to those skilled in the art. Unless otherwise specified, all parts and percentages are by weight.

### EXAMPLES

### Example 1

Polyisocyanate 1, DESMODUR® N3390 (HDI trimer available from Bayer Polymers), was reacted with 10 mol% (1-A), 20 mol% (1-B), and 30 mol% (1-C) of dimethyl ethanol amine, to adduct a portion of the isocyanate groups. Each partially adducted polyisocyanate was then mixed with Polyol 1, DESMOPHEN® 650A-65 (Bayer Polymers), a saturated polyester polyol having an equivalent weight of about 325 (between 320 and 330), a functionality of 12 and a molecular weight (Mn) of about 3900 (between 3500 and 4300) as indicated in the table below.

| Polyisocyanate | Amount | Polyol 1 | Observation |
|---|---|---|---|
| Polyisocyanate 1 | 20g | 20g | phase separated |
| 1-A | 20g | 20g | clear |
| 1-B | 20g | 20g | clear |
| 1-C | 20g | 20g | clear |

### Example 2

Polyisocyanate 1, DESMODUR® N3390, was reacted with 10 mol% (2-A), 20 mol% (2-B), and 30 mol% (2-C) of dimethyl ethanol amine, to adduct a portion of the isocyanate groups. Each partially adducted polyisocyanate was then mixed with Polyol 2, MULTRANOL® 9171 (Bayer Polymers), a polyether prepared by the reaction of sucrose, propylene glycol, and water with propylene oxide having a hydroxyl number of 340, as indicated in the table below.

| Polyisocyanate | Amount | Polyol 2 | Observation |
|---|---|---|---|
| Polyisocyanate 1 | 20g | 20g | phase separated |
| 1-A | 20g | 20g | clear |
| 1-B | 20g | 20g | clear |
| 1-C | 20g | 20g | clear |

### Example 3

Polyisocyanate 2, DESMODUR® N75 (HDI biuret available from Bayer Polymers), was reacted with 10 mol% (1-A), 20 mol% (1-B), and 30 mol% (1-C) of dimethyl ethanol amine, to adduct a portion of the isocyanate groups. Each partially adducted polyisocyanate was then mixed with Polyol 1, DESMOPHEN® 650A-65 as indicated in the table below.

| Polyisocyanate | Amount | Polyol 1 | Observation |
|---|---|---|---|
| Polyisocyanate 2 | 20g | 20g | phase separated |
| 1-A | 20g | 20g | clear |
| 1-B | 20g | 20g | clear |
| 1-C | 20g | 20g | clear |

### Example 4

Polyisocyanate 2, DESMODUR® N75, was reacted with 10 mol% (2-A), 20 mol% (2-B), and 30 mol% (2-C) of dimethyl ethanol amine, to adduct a portion of the isocyanate groups. Each partially adducted polyisocyanate was then mixed with Polyol 2, MULTRANOL® 9171 as indicated in the table below.

| Polyisocyanate | Amount | Polyol 2 | Observation |
|---|---|---|---|
| Polyisocyanate 2 | 20g | 20g | difficult to mix |
| 1-A | 20g | 20g | easier to mix, clear |
| 1-B | 20g | 20g | foamy, but clear |
| 1-C | 20g | 20g | foamy, but clear |

### Examples 5-6

Coating formulations were prepared by mixing the following ingredients (weight percentages) at ambient conditions. Viscosity was determined as efflux time at the indicated time intervals using a #2 Zahn cup (Paul H. Gardner Co. Inc., Pompano Beach, FL).

| | Example 5 | Example 6 | Example 7 |
|---|---|---|---|
| DESMODUR® N3390 | 28.0 | -- | -- |
| +10% glycerine carbonate¹ | -- | 32.7 | -- |
| +15% glycerine carbonate¹ | -- | -- | 35.3 |
| DESMOPHEN® 650A-65 | 40.0 | 33.5 | 29.8 |
| BYK® 331² | 0.3 | 0.3 | 0.3 |
| BYK® 331³ | 0.5 | 0.5 | 0.5 |
| RC Catalyst 201⁴ | 0.5 | 0.5 | 0.5 |
| TINUVIN® 1130⁵ | 1.0 | 1.0 | 1.0 |
| TINUVIN®292⁶ | 0.5 | 0.5 | 0.5 |
| n-Butyl acetate | 9.8 | 10.4 | 10.7 |
| Methyl isobutyl ketone | 14.6 | 15.5 | 16.0 |
| Xylene | 4.9 | 5.2 | 5.3 |
| Mix Ratio (volume) | 2.9:1 | 2.4:1 | |
| 2.2:1 | | | |
| NCO:OH | 1.05 | 1.05 | |
| 1.05 | | | |
| Viscosity (sec., 1 min.) | 60 | 23 | 21 |
| Viscosity (sec., 30 min.) | 18 | 26 | 24 |
| Viscosity (sec., 1 hr.) | 45 | 38 | 35 |
| Viscosity (sec., 2 hr.) | 120 | 74 | 62 |

| | | | |
|---|---|---|---|
| ¹ HDI trimer adducted with glycerine carbonate in the indicated percentage | | | |
| ² BYK-Chemie GmbH, Wesel, Germany | | | |
| ³ BYK-Chemie GmbH | | | |
| ⁴ DPZ, Rhein Chemie Rheinau, GmbH, Manheim, Germany | | | |
| ⁵ Ciba Specialty Chemicals, Tarrytown, NY | | | |
| ⁶ Ciba Specialty Chemicals | | | |

The coating formulations were evaluated on glass and steel substrates by coating the substrates as indicated in the table below. The coatings were evaluated for gloss according to the ASTM D523 Standard using a Byk-Gardner Glossmeter. In some cases, artificial weathering in an ATLAS xenon Weatherometer, 6000 W, Pyrex filter, cycle 102:18 was performed prior to taking gloss measurements.

The results indicate improvements in gloss and dry time development as well as pot life stabilization due to improved solution compatibility without reduction in other physical properties (e.g. hardness development).

Dry time for the example was obtained with Gardner Circular Dry Time Apparatus with 12 g load and a circulation speed of one revolution per 6 hours, in which the character of the marks made by the stylus is related to the drying of the film. Dry through time is the time period required for the groove to form a single line. When the tendency to form a permanent groove has ceased, the film was considered dry hard.

Pendulum hardness of the cured coatings was determined in accordance with DIN 53157.

Methyl ethyl Ketone (MEK) double rubs were measured as follows. The ball of a 2 lb ball pein hammer was securely wrapped with several layers of cloth (8"x 8" cloth folded twice) and secured using a rubber band. The cloth was saturated with MEK. The wet ball pein hammer was laid on the coating surface, so that the ball pein is at a 90° angle to the surface. Without applying downward pressure, the hammer is pushed back and forth over an approximately 4" long area of the coating. One forward and back motion was counted as 1 double rub. The cloth was resaturated with MEK after every 25 double rubs. The appearance (clarity and gloss) of the coatings were rated on a scale of 1 to 10 (10 being best).

| Substrate/test | Formulation of Example 5 | Formulation of Example 6 | Formulation of Example 7 |
|---|---|---|---|
| Cold rolled steel prepped by MEK wipe, coating spray-applied and cured at ambient conditions. | | | |
| 20° Gloss | 30 | 91 | 92 |
| 60° Gloss | 71 | 95 | 94 |
| Cold rolled steel prepped by MEK wipe, coating applied by drawdown and cured at ambient conditions. | | | |
| MEK double rub | 10 | 10 | 7 |
| Water Spotting (1 hr.) | 3 | 3 | 3 |
| Water Spotting (4 hr.) | 3 | 5 | 3 |
| Water Spotting (8 hr.) | 3 | 7 | 6 |
| Glass prepped by MEK wipe, coating applied by drawdown and cured at ambient conditions. | | | |
| Gardner Circular Dry Time | | | |
| Dry through | 3 hr. | 1.5 hr. | 2 hr. |
| Dry hard | 3.75 hr. | 2 hr. | 3 hr. |
| Pendulum Hardness | | | |
| 1 day | 174 sec. | 165 sec. | 129 sec. |
| 7 day | 212 sec. | 214 sec. | 181 sec. |
| 14 day | 217 sec. | 216 sec. | 181 sec. |
| ASTM D 523 Gloss | | | |
| Initial | | | |
| 20° | 37 | 90 | 92 |
| 60° | 75 | 94 | 96 |
| After weatherometer | | | |
| 20° | 45 | 92 | 91 |
| 60° | 79 | 95 | 94 |

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

## Claims

1. A composition comprising a mixture of
A) a prepolymer of aliphatic isocyanates adducted with an active hydrogen functional compound containing a polar group; and
B) a polyol containing at least four active hydrogen groups;
wherein the mixture does not separate into two phases after standing at room temperature for two hours.

2. The composition according to Claim 1, wherein the active hydrogen functional compound in A) is hydroxyl-functional.

3. The composition according to Claim 1, wherein the prepolymer of aliphatic isocyanates is the product of an oligomerization reaction of aliphatic diisocyanates.

4. The composition according to Claim 3, wherein the oligomerization reaction includes one or more selected from the group consisting of carbodiimidization, dimerization, trimerization, biuretization, urea formation, urethanization, allophanatization and/or cyclization with the formation of oxadiazine structures.

5. The composition according to Claim 1, wherein the aliphatic isocyanates comprise polyisocyanates based on aliphatic diisocyanates, cycloaliphatic diisocyanates, and/or araliphatic diisocyanates.

6. The compositions according to Claim 1, wherein the prepolymer of aliphatic isocyanates contain one or more groups selected from the group consisting of urethane, urea, uretdione, isocyanurate, allophanate, biuret, iminooxadiazinedione and oxadiazinetrione,

7. The composition according to Claim 1, wherein the aliphatic isocyanates are diisocyanates selected from the groups consisting of 1,4-diisocyanatobutane, 1,6-diisocyanatohexane (HDI), 2-methyl-1,5-diisocyanatopentane, 1,5-diisocyanato-2,2-dimethylpentane, 2,2,4- and 2,4,4-trimethyl-1,6-diisocyanatohexane, 1,10-diisocyanatodecane, 1,3-and 1,4-diisocyanatocyclohexane, 1,3- and 1,4-bis-(isocyanatomethyl)-cyclohexane, 1-isocyanato-3,3,5-trimethyl-5-isocyanatomethylcyclohexane (isophorone diisocyanate, IPDI), 4,4'-diisocyanatodicyclohexylmethane, 1-isocyanato-1-methyl-4(3)isocyanato-methylcyclohexane (IMCI), bis-(isocyanatomethyl)-norbornane, 1,3- and 1,4-bis-(2-isocyanato-prop-2-yl)-benzene (TMXDI).

8. The composition according to Claim 1, wherein the active hydrogen functional compound containing a polar group is a compound according to the following structure:
Z-R¹-A
wherein,
R¹ is a C₁-C₂₄ linear, branched or cyclic alkylene, arylene, alkarylene, aralkylene, or alkenylene group,
Z is a polar group that does not contain an active hydrogen, and
A is a group selected from hydroxyl, thiol, carboxylic acid, amide, primary amine, secondary amine, and C₁-C₁₂ linear, branched or cyclic alkyl aspartate esters.

9. The composition according to Claim 8, wherein Z is a polar group selected from the group consisting of -NR²₂, -OR², -SR², -C(O)OR², -NO², silane, halide, sulfonate, ethyl carbonate, -S(O)OR², -P(O)OR², - PR²₂, -P(O)R², 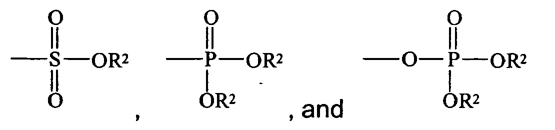
wherein each occurrence of R² is independently selected from C₁-C₆ linear, branched or cyclic alkyl.

10. The composition according to claim 2, wherein the hydroxyl-functional compound containing a polar group is selected from the group consisting of dimethyl ethanol amine, diethyl ethanol amine, methyl ethyl ethanol amine, and glycerine carbonate.

11. The composition according to Claim 1, wherein the polyol comprises one or more polyols selected from the group consisting of polyester polyols, polyether polyols, polyhydroxy polycarbonates, polyhydroxy polyacetals, polyhydroxy poly(meth)acrylates, polyhydroxy polyester amides and polyhydroxy polythioethers.

12. A coating composition comprising the composition of Claim 1 and one or more additives selected from the group consisting of solvents, plasticizers, pigments, fillers, catalysts, levelling agents, thickeners, stabilizers, light stabilizers, antioxidants, defoamers, catalysts and UV absorbers.

13. A method of coating a substrate comprising applying the coating composition of Claim 12 to at least a portion of a surface of the substrate.

14. Substrates coated according to the method of Claim 13.

15. The method of Claim 13, wherein the substrate comprises metal, plastic and/or wood.
